# EUROPEAN PATENT APPLICATION

(11) **EP 4 773 253 A1**
(43) Date of publication of application: **08.07.2026**
(21) Application number: 24859822.9
(22) Date of filing: 28.08.2024
(51) Int. Cl.: H01M 4/64, H01M 4/13, H01M 4/66, H01M 10/04, H01M 10/0587

(54) **ELECTRODE CURRENT COLLECTOR FOR SECONDARY BATTERIES, AND SECONDARY BATTERY**

(30) Priority: 31.08.2023 JP 2023141430
(71) Applicant: Panasonic Intellectual Property Management Co., Ltd., Kadoma-shi, Osaka 571-0057 (JP)
(72) Inventor: KISHI, Takuma, Osaka 571-0057 (JP); CHIBA, Takeshi, Osaka 571-0057 (JP); YAMAMOTO, Norihisa, Osaka 571-0057 (JP)
(74) Representative: Eisenführ Speiser
(86) International application number: PCT/JP2024/030681
(87) International publication number: WO 2025/047791

(57) **Abstract**

An electrode current collector for secondary batteries includes a metal foil containing aluminum. The elongation percentage at break D1 of the metal foil at a tensile speed of 5.0 mm/min and the elongation percentage at break D2 of the metal foil at a tensile speed of 0.1 mm/min satisfy a relationship 1.3 ≤ D2/D1 . The tensile strength T1 of the metal foil at a tensile speed of 5.0 mm/min and the tensile strength T2 of the metal foil at a tensile speed of 0.1 mm/min satisfy a relationship 0.85 ≤ T2/T1.

## Description

### [Technical Field]

The present disclosure relates to an electrode current collector for secondary batteries, and a secondary battery.

### [Background Art]

A secondary battery includes, for example, an electrode group, and an electrolyte. The electrode group is constituted by spirally winding a positive electrode and a negative electrode, with a separator interposed therebetween. For the negative electrode current collector, copper foil is used, for example. For the positive electrode current collector, aluminum foil is used, for example.

Patent Literature 1 proposes "an electrolytic copper foil for a secondary battery, produced using a drum with a plating solution containing TOC, cobalt, and iron, and coated with a cathode active material, in which the ratios of the TOC, the cobalt, and the iron contained in the electrolytic copper foil conform the following equation 1". The equation 1 is TOC/(cobalt + iron) = 1.3 to 1.5.

### [Citation List]

### [Patent Literature]

Patent Literature 1: Japanese Laid-Open Patent Publication No. 2019-536212

### [Summary of Invention]

### [Technical Problem]

Cracks or breaking may occur in the aluminum foil used as the current collector, causing the performance of the secondary battery to degrade in some cases.

### [Solution to Problem]

One aspect of the present disclosure relates to an electrode current collector for secondary batteries, including: a metal foil containing aluminum, wherein an elongation percentage at break D1 of the metal foil at a tensile speed of 5.0 mm/min and an elongation percentage at break D2 of the metal foil at a tensile speed of 0.1 mm/min satisfy a relationship 1.3 ≤ D2/D1, and a tensile strength T1 of the metal foil at a tensile speed of 5.0 mm/min and a tensile strength T2 of the metal foil at a tensile speed of 0.1 mm/min satisfy a relationship 0.85 ≤ T2/Tl.

Another aspect of the present disclosure relates to a secondary battery, including: an electrode group including a positive electrode, a negative electrode, and a separator disposed between the positive electrode and the negative electrode, which are wound together; and an electrolyte, wherein the positive electrode includes a positive electrode current collector, and a positive electrode mixture layer supported on each of both surfaces of the positive electrode current collector, and the positive electrode current collector of the positive electrode is the above-described electrode current collector for secondary batteries.

### [Advantageous Effects of Invention]

According to the present disclosure, it is possible to suppress the performance degradation of the secondary battery.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

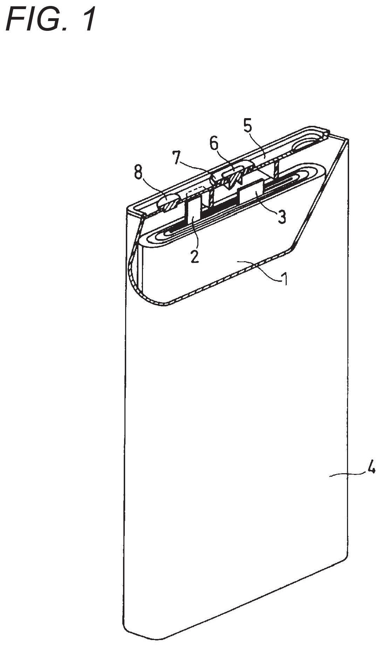

[FIG. 1] A partially cut-away schematic oblique view of a secondary battery according to one embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

### (Electrode current collector for secondary batteries)

An electrode current collector for secondary batteries according to an embodiment of the present disclosure includes a metal foil containing aluminum (Al) (hereinafter may be referred to as an "Al-containing foil"). The Al-containing foil satisfies the following conditions (i) and (ii). The Al-containing foil referred to herein means a foil mainly composed of Al, with an Al content of 98 mass% or more.
(i) The elongation percentage at break D1 of the metal foil at a tensile speed of 5.0 mm/min and the elongation percentage at break D2 of the metal foil at a tensile speed of 0.1 mm/min satisfy a relationship 1.3 ≤ D2/D1.
(ii) The tensile strength T1 of the metal foil at a tensile speed of 5.0 mm/min and the tensile strength T2 of the metal foil at a tensile speed of 0.1 mm/min satisfy a relationship 0.85 ≤ T2/T1.

When the conditions of (i) and (ii) are satisfied, the occurrence of breakage or cracks (hereinafter may be referred to as "breakage, etc.") of the electrode current collector can be suppressed both in the battery manufacturing and during the battery use. The performance degradation of the secondary battery (the decrease of initial capacity, the reduction in cycle characteristics, etc.) due to breakage, etc. of the electrode current collector can be suppressed.

Cracks may occur in some cases in the Al-containing foil during charging and discharging, causing the charge-discharge characteristics to be reduced. One possible solution to suppress the occurrence of cracks would be to use an Al-containing foil with high tensile strength. This however may result in reduced elongation percentage at break (ductility), which may cause breakage in the battery manufacturing. The tensile strength and the elongation percentage at break have such a relationship that with increase (decrease) of the tensile strength, the elongation percentage at break decreases (increases).

To ensure good battery performance, it is necessary to suppress the breakage, etc. of the Al-containing foil both in the battery manufacturing and during the battery use (during charging and discharging). In the battery manufacturing, a tensile stress is generated in the Al-containing foil in a step of producing an electrode (transporting of the Al-containing foil to an electrode slurry coater, winding of the produced electrode, and the like), a step of forming a wound electrode group, and other steps. During the use of a battery including a wound electrode group, in association with expansion and contraction of the electrode mixture layer during charging and discharging, a tensile stress is generated in the wound Al-containing foil. The speed of the load applied to the Al-containing foil is 5.0 mm/min or less in the battery manufacturing, and 0.1 mm/min or less during the battery use. To prevent the breakage, etc. of the Al-containing foil both in the battery manufacturing and during the battery use, a consistent tensile strength and a consistent elongation percentage at break are required for different speeds of the load applied thereto.

Based on the above findings, the present inventors conducted extensive studies, with focus on the tensile strengths T1 and T2 and the elongation percentages at break D1 and D2, at tensile speeds of 5.0 mm/min and of 0.1 mm/min. As a result, the present inventors have newly found that when D2/D1 is 1.3 or more and T2/T1 is 0.85 or more, the breakage, etc. of the Al-containing foil can be suppressed both in the battery manufacturing and during the battery use. In the above case, moderate strength and elongation can be simultaneously ensured both in the battery manufacturing and during the battery use.

If the D2/D1 is less than 1.3, breakage, etc. may occur due to a decrease of D2 and/or an increase of D1 (a decrease of T1).

If the T2/T1 is less than 0.85, breakage, etc. may occur due to a decrease of T2 and/or an increase of T1 (a decrease of D1).

The T2/T1 may be 0.85 or more and 1.00 or less. The D2/D1 may be 1.3 or more and 2.0 or less.

From the viewpoint of suppressing the breakage, etc. of the Al-containing foil in the battery manufacturing, the tensile strength T1 is preferably 150 MPa or more and 300 MPa or less. When the tensile strength T1 is 150 MPa or more, the breakage, etc. of the Al-containing foil in the electrode production is likely to be suppressed. When the tensile strength T1 is 300 MPa or less, the breakage, etc. of the Al-containing foil in the wound electrode group production is likely to be suppressed. From the similar viewpoint, the elongation percentage at break D1 may be 2.0% or more, and is preferably 3.0% or more.

From the viewpoint of suppressing the breakage, etc. of the Al-containing foil during charging and discharging, the tensile strength T2 may be 130 MPa or more and 300 MPa or less. From the similar viewpoint, the elongation percentage at break D2 may be 2.5% or more, and is preferably 4.0% or more.

From the viewpoint of achieving high energy density, the thickness of the Al-containing foil may be 30 µm or less, and may be 25 µm or less. From the viewpoint of ensuring the strength and the like, the thickness of the Al-containing foil may be 5 µm or more. The thickness of the Al-containing foil may be in the range of, for example, 5 µm or more and 30 µm or less, which may be 5 µm or more and 25 µm or less.

The Al-containing foil may be an Al metal foil, and may be an Al alloy foil. The Al-containing foil may contain other metals except Al (e.g., Fe, Si, Mn, Cu, etc.). The content of other metals except Al is, for example, 1 mass% or less. The content of Al in the Al-containing foil may be 99 mass% or more. Increasing the purity of Al can ensure the ductility of the Al-containing foil. The Al-containing foil may also contain iron (Fe) and silicon (Si) as other metals except Al. In this case, the content of Al in the Al-containing foil may be 98 mass% or more and less than 99 mass%, and a total content of Fe and Si in the Al-containing foil may be 1.20 mass% or more and 1.85 mass% or less. When the Al content is relatively low, the ductility of the Al-containing foil can be ensured by containing Fe and Si.

### (Elongation percentage at break and tensile strength)

The "elongation percentage at break" and the "tensile strength" referred to herein mean a breaking elongation (A) and a tensile strength (Rm), respectively, determined by a tensile test in accordance with JIS Z2241. The tensile speed refers to a crosshead displacement speed.

The elongation percentage at break and the tensile strength can be determined by a tensile test in accordance with JIS Z2241. As the test piece used for the tensile test, a strip-shaped test piece of a predetermined size is collected from the Al-containing foil. The size of the test piece is, for example, 120 mm in the longitudinal direction and 15 mm in the lateral direction. The test is performed in an environment of 25 °C. The test piece is pulled in the longitudinal direction at a predetermined crosshead displacement speed, to determine the maximum stress applied until the test piece breaks is determined as the tensile strength.

Furthermore, a gauge length dimension before the test (original gauge length) Lo and a gauge length dimension at the time of break (final gauge length after break) Lu are also determined. The ratio (percentage) of the difference between the gauge length dimension at the time of break and the gauge length dimension before the test, to the gauge length dimension before the test is determined as an elongation percentage at break. In short, (Lu-Lo)/Lo × 100 is calculated as the elongation percentage at break (%).

In the above, the tensile strength T1 and the elongation percentage at break D1 at a crosshead displacement speed of 5.0 mm/min, and the tensile strength T2 and the elongation percentage at break D2 at a crosshead displacement speed of 0.1 mm/min are determined, respectively.

Here, the test pieces are collected from the Al-containing foil at randomly selected several spots (e.g., 3 to 6 spots). The D1, D2, T1, and T2 are each determined by averaging the measured values of a plurality of the test pieces.

### (Secondary battery)

A secondary battery according to an embodiment of the present disclosure includes an electrode group including a positive electrode, a negative electrode, and a separator disposed between the positive electrode and the negative electrode, which are wound together, and an electrolyte. The electrode group is formed by spirally winding a belt-shaped positive electrode and a belt-shaped negative electrode, with a separator interposed therebetween. The wound electrode group may be cylindrical, and may be formed into a flat shape by compressing the cylindrical electrode group in its radial direction. The positive electrode includes a positive electrode current collector, and a positive electrode mixture layer supported on each of both surfaces of the positive electrode current collector. The positive electrode current collector is the above-described electrode current collector for secondary batteries. Using the above-described electrode current collector for secondary batteries can suppress the performance degradation of the secondary battery due to the breakage, etc. of the positive electrode current collector.

The amount of the positive electrode mixture layer supported on each surface of the positive electrode current collector is preferably 240 g/m² or more and 400 g/m² or less. When the amount of the supported positive electrode mixture layer is within the above range, the capacity can be easily increased. Also, since the amount of the supported positive electrode mixture layer is large, when winding the electrodes and during charging and discharging of the battery, a load tends to be applied to the positive electrode current collector in close contact with the positive electrode mixture layer, and the breakage, etc. tend to occur. Therefore, the effect of suppressing the breakage, etc. of the positive electrode current collector obtained by using the above-described electrode current collector for secondary batteries can be remarkably obtained.

Secondary batteries include nonaqueous electrolyte secondary batteries, such as lithium ion secondary batteries, lithium metal secondary batteries, and solid-state batteries containing a gel electrolyte or a solid electrolyte. That is, the secondary battery may be a liquid secondary battery containing an electrolyte solution as the electrolyte, or an all-solid-state secondary battery containing a solid electrolyte. A detailed description will be given below of the secondary battery.

### (Positive electrode)

The positive electrode includes a positive electrode current collector, and a positive electrode mixture layer supported on a surface of the positive electrode current collector. For the positive electrode current collector, the above-described electrode current collector for secondary batteries can be used. The positive electrode mixture layer can be formed by applying a positive electrode slurry of a positive electrode mixture dispersed in a dispersion medium, onto a surface of the positive electrode current collector, followed by drying. The applied film after drying may be rolled, as necessary.

The positive electrode mixture contains a positive electrode active material as an essential component, and may contain, as optional components, a binder, a conductive agent, and the like.

For the positive electrode active material, a material capable of absorbing and releasing lithium ions can be used, which may be a known material. The positive electrode active material is exemplified by a composite oxide containing lithium and a transition metal, and the like. Examples of the composite oxide include LiₐCoO₂, LiₐNiO₂, LiₐMnO₂, LiₐCobNi_{1-b}O₂, LiₐCo_{1-b}M_{b}O_{c}, LiₐNi_{1-b}M_{b}O_{c}, LiₐMn₂O₄, LiₐMn_{2-b}M_{b}O₄, LiMePO₄, and Li₂MePO₄F. Here, M is at least one element selected from the group consisting of Na, Mg, Sc, Y, Mn, Fe, Co, Ni, Cu, Zn, Al, Cr, Pb, Sb, and B. Me includes at least a transition element (e.g., at least one selected from the group consisting of Mn, Fe, Co, and Ni). Here, 0 ≤ a ≤ 1.2, 0 ≤ b ≤0.9, and 2.0 ≤ c ≤ 2.3. The value "a" representing the molar ratio of lithium increases and decreases during charging and discharging.

The binder is exemplified by a fluorocarbon resin, a polyolefin resin, a polyamide resin, a polyimide resin, a vinyl resin, styrene-butadiene copolymer rubber (SBR), polyacrylic acid and its derivatives, and the like. Examples of the fluorocarbon resin include polyvinylidene fluoride (PVDF), polytetrafluoroethylene (PTFE), tetrafluoroethylene-hexafluoropropylene copolymer, and vinylidene fluoride-hexafluoropropylene copolymer.

As the conductive agent, those exemplified for the negative electrode can be used. The conductive agent may be graphite, such as natural graphite and artificial graphite.

### (Negative electrode)

The negative electrode includes, for example, a negative electrode current collector, and a negative electrode mixture layer supported on a surface of the negative electrode current collector. The negative electrode mixture layer can be formed by, for example, applying a negative electrode slurry of a negative electrode mixture dispersed in a dispersion medium, onto a surface of the negative electrode current collector, followed by drying. The applied film after drying may be rolled, as necessary. The negative electrode may include a negative electrode current collector, and a lithium metal foil or lithium alloy foil supported on a surface of the negative electrode current collector.

The negative electrode mixture contains a negative electrode active material as an essential component, and may contain, as optional components, a binder, a conductive agent, a thickener, and the like.

The negative electrode active material includes a material capable of absorbing and releasing lithium ions, a lithium metal, a lithium alloy, and the like. As the material capable of absorbing and releasing lithium ions, a carbon material, an alloy-type material, and the like are used. Examples of the carbon material include graphite, graphitizable carbon (soft carbon), and non-graphitizable carbon (hard carbon). In particular, preferred is graphite which is stable during charging and discharging and whose irreversible capacity is small. As the alloy-type material, a material containing at least one metal capable of forming an alloy with lithium may be used, examples of which include silicon, tin, silicon alloy, tin alloy, and silicon compounds. These materials combined with oxygen, such as silicon oxide and tin oxide, may be used.

The silicon-containing alloy-type material may be a composite material including a lithium ion conductive phase and silicon phases (silicon particles) dispersed in the lithium ion conductive phase. As the lithium ion conductive phase, for example, a silicon oxide phase, a silicate phase, a carbon phase, and the like can be used. Silicon dioxide can be a major component (e.g., 95 to 100 mass%) of the silicon oxide phase. A composite material including a silicon oxide phase whose major component is silicon dioxide can be represented by SiOₓ where 0.5 ≤ x ≤ 1.6. The carbon phase can be constituted of, for example, shapeless carbon with low crystallinity (i.e., amorphous carbon). The amorphous carbon may be, for example, hard carbon, soft carbon, or others. The composite material may be used in combination with a carbon material.

A silicate phase containing lithium (lithium silicate phase) is preferred in terms of its small irreversible capacity and high initial charge-discharge efficiency. The lithium silicate phase may be an oxide phase containing lithium (Li), silicon (Si), and oxygen (O), and may contain other elements. Examples of other elements include iron (Fe), chromium (Cr), nickel (Ni), manganese (Mn), copper (Cu), molybdenum (Mo), zinc (Zn), and aluminum (Al). The lithium silicate phase can have a composition represented by a formula: Li_{2z}SiO_{2+z} where 0 < z < 2. The lithium silicate phase can include Li₂SiO₃, Li₂Si₂O₅, and the like.

As the binder, those exemplified for the positive electrode can be used. Examples of the conductive agent include carbon black, conductive fibers, carbon fluoride, and an organic conductive material. Examples of the thickener include carboxymethyl cellulose (CMC), and polyvinyl alcohol.

As the negative electrode current collector, a non-porous electrically conductive substrate (e.g., metal foil), a porous electrically conductive substrate (e.g., mesh, net, punched sheet), and the like can be used. Examples of the material for the negative electrode current collector include stainless steel, nickel, nickel alloy, copper, and copper alloy.

### (Electrolyte)

The electrolyte may be a liquid electrolyte (electrolyte solution), may be a gel electrolyte, and may be a solid electrolyte. The liquid electrolyte is, for example, an electrolyte solution containing a nonaqueous solvent and a salt dissolved in the nonaqueous solvent. The concentration of the salt in the electrolyte solution is, for example, 0.5 mol/L or more and 2 mol/L or less. The electrolyte solution may contain a known additive.

The gel electrolyte contains a salt and a matrix polymer, or contains a salt, a nonaqueous solvent, and a matrix polymer. As the matrix polymer, for example, a polymer material that absorbs a nonaqueous solvent and turns into a gel is used. Examples of the polymer material include fluorocarbon resins, acrylic resins, polyether resins, and polyethylene oxide.

As the solid electrolyte, for example, a known material for use in all-solid lithium ion secondary batteries and the like (e.g., oxide-based solid electrolyte, sulfide-based solid electrolyte, halide-based solid electrolyte) is used.

For example, a nonaqueous electrolyte in a liquid state is prepared by dissolving a salt in a nonaqueous solvent. The salt is an electrolyte salt that ionically dissociates in the electrolyte, and can include, for example, a lithium salt. The electrolyte can contain various additives. The electrolyte is usually used as it is in a liquid state, but may be in a state in which the fluidity is restricted by a gelling agent or the like.

The solvent may be an aqueous solvent or a nonaqueous solvent. As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl acetate, ethyl acetate, propyl acetate, methyl propionate (MP), and ethyl propionate (EP). The nonaqueous solvent may be used singly or in combination of two or more kinds.

As the lithium salt, for example, lithium salts of chlorine-containing acids (LiClO₄, LiAlCl₄, LiB₁₀Cl₁₀, etc.), lithium salts of fluorine-containing acids (LiPF₆, LiPF₂O₂, LiBF₄, LiSbF₆, LiAsF₆, LiCF₃SO₃, LiCF₃CO₂, etc.), lithium salts of fluorine-containing acid imides (LiN(FSO₂)₂, LiN(CF₃SO₂)₂, LiN(CF₃SO₂)(C₄F₉SO₂), LiN(C₂F₅SO₂)₂, etc.), lithium halides (LiCl, LiBr, Lil, etc.), and the like can be used. These lithium salts may be used singly or in combination of two or more kinds.

The concentration of the lithium salt in the electrolyte may be 1 mol/L or more and 2 mol/L or less, and may be 1 mol/L or more and 1.5 mol/L or less. By controlling the lithium salt concentration in the above range, an electrolyte having excellent ion conductivity and moderate viscosity can be obtained. The lithium salt concentration is not limited to the above.

### (Separator)

It is desirable to interpose a separator between the positive electrode and the negative electrode. The separator is excellent in ion permeability and has moderate mechanical strength and electrically insulating properties. As the separator, a microporous thin film, a woven fabric, a nonwoven fabric, and the like can be used. As the material of the separator, polyolefin, such as polypropylene and polyethylene, is preferred.

Examples of the structure of the secondary battery include a structure in which an electrode group formed by winding the positive electrode and the negative electrode with the separator interposed therebetween is housed in an outer body, together with the nonaqueous electrolyte, but are not limited thereto. The form of the battery is also not limited, and may be any form, such as cylindrical type, prismatic type, and laminate type.

The structure of a prismatic secondary battery as an example of the secondary battery according to the present disclosure will be described below with reference to FIG. 1.

The battery includes a bottomed prismatic battery case 4, and an electrode group 1 and an electrolyte (not shown) which are housed in the battery case 4. The electrode group 1 is constituted by spirally winding a long belt-shaped negative electrode, a long belt-shaped positive electrode, and a separator interposed between the positive electrode and the negative electrode. The negative electrode current collector of the negative electrode is electrically connected to a negative electrode terminal 6 disposed on a sealing plate 5 via a negative electrode lead 3. The negative electrode terminal 6 is electrically insulated from the sealing plate 5 by a gasket 7 made of resin. The positive electrode current collector of the positive electrode is electrically connected to the back side of the sealing plate 5 via a positive electrode lead 2. In other words, the positive electrode is electrically connected to the battery case 4, which also serves as the positive electrode terminal. The periphery of the sealing plate 5 is fitted into the opening end of the battery case 4, and the fitted portion is laser-welded. The sealing plate 5 has an electrolyte injection hole, which is closed with a sealing plug 8 after the electrolyte injection.

### (Supplementary notes)

The above description of embodiments discloses the following techniques.

### (Technique 1)

An electrode current collector for secondary batteries, comprising:
a metal foil containing aluminum, wherein
an elongation percentage at break D1 of the metal foil at a tensile speed of 5.0 mm/min and an elongation percentage at break D2 of the metal foil at a tensile speed of 0.1 mm/min satisfy a relationship 1.3 ≤ D2/D1, and
a tensile strength T1 of the metal foil at a tensile speed of 5.0 mm/min and a tensile strength T2 of the metal foil at a tensile speed of 0.1 mm/min satisfy a relationship 0.85 ≤ T2/T1.

### (Technique 2)

The electrode current collector for secondary batteries according to technique 1, wherein the tensile strength T1 of the metal foil is 150 MPa or more and 300 MPa or less.

### (Technique 3)

The electrode current collector for secondary batteries according to technique 1 or 2, wherein a thickness of the metal foil is 30 µm or less.

### (Technique 4)

The electrode current collector for secondary batteries according to any one of techniques 1 to 3, wherein a content of the aluminum in the metal foil is 99 mass% or more.

### (Technique 5)

The electrode current collector for secondary batteries according to any one of techniques 1 to 3, wherein
the metal foil further contains iron and silicon,
a content of the aluminum in the metal foil is 98 mass% or more and less than 99 mass%, and
a total content of the iron and the silicon in the metal foil is 1.20 mass% or more and 1.85 mass% or less.

### (Technique 6)

A secondary battery, comprising:
an electrode group including a positive electrode, a negative electrode, and a separator disposed between the positive electrode and the negative electrode, which are wound together; and an electrolyte, wherein
the positive electrode includes a positive electrode current collector, and a positive electrode mixture layer supported on each of both surfaces of the positive electrode current collector, and
the positive electrode current collector of the positive electrode is the electrode current collector for secondary batteries according to any one of techniques 1 to 5.

### (Technique 7)

The secondary battery according to technique 6, wherein an amount of the positive electrode mixture layer supported on each surface of the positive electrode current collector is 240 g/m² or more and 400 g/m² or less.

### [Examples]

### [Examples]

The present disclosure will be more specifically described below with reference to Examples and Comparative Examples. The present disclosure, however, is not limited to the following Examples.

### <<Secondary batteries Al to A4, B1 to B4>>

### (Production of positive electrode)

To 95 parts by mass of a lithium-transition metal-containing composite oxide (LiNi_{0.8}Co_{0.18}Al_{0.02}O₂), 2.5 parts by mass of acetylene black, 2.5 parts by mass of polyvinylidene fluoride, and an appropriate amount of N-methyl-2-pyrrolidone (NMP) were added, and mixed, to obtain a positive electrode slurry.

Next, the positive electrode slurry was applied onto both surfaces of a positive electrode current collector. The applied films were dried, and then rolled, to form positive electrode mixture layers. Thus, a positive electrode was obtained.

The positive electrode current collector used here was a strip-shaped Al-containing foil. The D2/D1, the T2/T1, and the T1 were set to the values shown in Table 1. The thickness of the Al-containing foil was set to the values shown in Table 1. The tensile strength and the elongation percentage at break were adjusted by changing the composition and the thickness of the Al-containing foil.

The amount of the positive electrode mixture layer supported on each surface of the positive electrode current collector was set within the range of 240 g/m² or more and 400 g/m² or less.

### (Production of negative electrode)

To 97.5 parts by mass of a negative electrode active material, 1 part by mass of a Na salt of carboxymethyl cellulose (CMC-Na), 1.5 parts by mass of styrene-butadiene rubber (SBR), and an appropriate amount of water were added, to obtain a negative electrode slurry. As the negative electrode active material, a composite material containing Si, and graphite were used. The mass ratio of the composite material to the graphite was set to 10:90. The composite material used here was SiOₓ where 0.5 ≤ x ≤ 1.6.

Next, the negative electrode slurry was applied onto both surfaces of a copper foil serving as a negative electrode current collector. The applied films were dried, and then rolled, to form negative electrode mixture layers. Thus, a negative electrode was obtained.

### (Preparation of nonaqueous electrolyte)

LiPF₆ was dissolved at a concentration of 1.0 mol/L in a mixed solvent of ethylene carbonate (EC) and dimethyl carbonate (DMC) (volume ratio 3:7), to obtain a nonaqueous electrolyte.

### (Fabrication of nonaqueous electrolyte secondary battery)

A positive electrode lead made of Al was attached to the positive electrode obtained above, and a negative electrode lead made of Ni was attached to the negative electrode obtained above. The positive electrode and the negative electrode were spirally wound with a polyolefin separator interposed therebetween, which was then pressed in the radial direction, to form a flat electrode group. The separator used here was a microporous film made of polyolefin. The electrode group was housed in an outer body constituted of an aluminum laminate sheet, into which the nonaqueous electrolyte was injected, and then, the opening of the outer body was sealed. At this time, a part of each of the leads attached to the positive electrode and negative electrode was exposed from the outer body.

In Table 1, secondary batteries A1 to A4 are of Examples, and secondary batteries B1 to B4 are of Comparative Examples.

### (Charge-discharge cycle test)

Each battery was subjected to a cycle test in a 25 °C environment, under the following charge-discharge conditions. The rest time between charging and discharging was set to 10 minutes.

### (Charging)

A constant-current charging was performed at a current of 0.3 C until the voltage reached 4.2 V.

### (Discharging)

A constant-current discharging was performed at a current of 0.5 C until the voltage reached 2.85 V.

Under the above conditions, 100 cycles of charging and discharging were performed, and the ratio (percentage) of a discharge capacity at the 100th cycle to a discharge capacity at the first cycle was calculated as a capacity retention rate.

The evaluation results are shown in Table 1.

**[Table 1]**

| secondary battery | thickness of Al-containing foil (µm) | D2/D1 | T2/T1 | T1 (MPa) | capacity retention rate at 100th cycle (%) |
|---|---|---|---|---|---|
| A1 | 15 | 1.72 | 0.88 | 177 | 99.1 |
| A2 | 14 | 1.57 | 0.92 | 262 | 97.5 |
| A3 | 13 | 1.45 | 0.91 | 240 | 98.3 |
| A4 | 20 | 1.33 | 0.86 | 195 | 97.8 |
| B1 | 13 | 1.80 | 0.84 | 140 | 93.8 |
| B2 | 16 | 1.25 | 0.87 | 187 | 92.9 |
| B3 | 17 | 1.20 | 0.87 | 217 | 93.3 |
| B4 | 11 | 1.11 | 0.89 | 190 | 91.5 |

In the secondary batteries A1 to A4, as compared to the secondary batteries B1 to B4, the capacity retention rates were high.

In the secondary batteries B1 to B4, cracks or breakage occurred in the positive electrode current collector, resulted in low capacity retention rates.

### [Industrial Applicability]

The secondary battery according to the present disclosure is useful as a main power source for mobile communication equipment, electric cars, hybrid electric cars, portable electronic equipment, and other devices.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug

## Claims

1. An electrode current collector for secondary batteries, comprising:
a metal foil containing aluminum, wherein
an elongation percentage at break D1 of the metal foil at a tensile speed of 5.0 mm/min and an elongation percentage at break D2 of the metal foil at a tensile speed of 0.1 mm/min satisfy a relationship 1.3 ≤ D2/D1, and
a tensile strength T1 of the metal foil at a tensile speed of 5.0 mm/min and a tensile strength T2 of the metal foil at a tensile speed of 0.1 mm/min satisfy a relationship 0.85 ≤ T2/T1.

2. The electrode current collector for secondary batteries according to claim 1,
wherein the tensile strength T1 of the metal foil is 150 MPa or more and 300 MPa or less.

3. The electrode current collector for secondary batteries according to claim 1,
wherein a thickness of the metal foil is 30 µm or less.

4. The electrode current collector for secondary batteries according to claim 1,
wherein a content of the aluminum in the metal foil is 99 mass% or more.

5. The electrode current collector for secondary batteries according to claim 1,
wherein
the metal foil further contains iron and silicon,
a content of the aluminum in the metal foil is 98 mass% or more and less than 99 mass%, and
a total content of the iron and the silicon in the metal foil is 1.20 mass% or more and 1.85 mass% or less.

6. A secondary battery, comprising:
an electrode group including a positive electrode, a negative electrode, and a separator disposed between the positive electrode and the negative electrode, which are wound together; and an electrolyte, wherein
the positive electrode includes a positive electrode current collector, and a positive electrode mixture layer supported on each of both surfaces of the positive electrode current collector, and
the positive electrode current collector of the positive electrode is the electrode current collector for secondary batteries according to claim 1.

7. The secondary battery according to claim 6, wherein an amount of the positive electrode mixture layer supported on each surface of the positive electrode current collector is 240 g/m² or more and 400 g/m² or less.
